# EUROPEAN PATENT APPLICATION

(11) **EP 0 901 878 A1**
(43) Date of publication of application: **17.03.1999**
(21) Application number: 98115999.9
(22) Date of filing: 25.08.1998
(51) Int. Cl.: B23Q 3/155

(54) **Tool carrier for numeric-control machine tools**

(30) Priority: 09.09.1997 IT TO970797
(71) Applicant: VIGEL S.p.A., I-10071 Borgaro Torinese (Torino) (IT)
(72) Inventor: Martinis, Marco, 10136 Torino (IT); Cavallo, Giorgio, 10071 Borgaro Torinese, (Torino) (IT)
(74) Representative: Modiano, Guido, Dr.-Ing.

(57) **Abstract**

A tool carrier for numeric-control machine tools comprising an elongated body (10) which is rotatably mounted on a chosen fixed axis and is provided with at least two tool-holder racks (16, 18) on longitudinal sides which are angularly mutually spaced in a symmetrical fashion. A rack-and-pinion device (15) is adapted to rotate the elongated body to place a chosen rack in a fixed angular position which can be accessed by a tool changing element.

## Description

The present invention relates to a rack-type tool carrier for numeric-control machine tools.

Conventional automatic carriers of the drum or rack type are used in order to allow numeric-control machine tools to change tool under the control of the program without interrupting the machining process. In the first case, this is accomplished by rotating the drum until the chosen tool is in a fixed position which can be accessed by the working head or by a swapping arm. In the second case, it is performed by moving the working head along the rack to a position in front of the chosen tool.

It is known to the expert in the field that drum-type carriers are bulky and expensive, while rack-type carriers are simple and compact. However, rack-type carriers cannot be longer than the stroke that can be performed by the working head, and this is a limitation which is particularly felt in the case of small machines in which the movements that the head must perform are confined to a limited area.

The limit to the number of tools accessible on the rack is even more strongly felt in the case of machine tools with a working head provided with two spindles and two worktables, since in this case the tools are changed in pairs, thus halving the assortment of tools available.

The aim of the invention is to increase the number of tools available to the machining program in a numeric-control machine tool, given an equal stroke executable by the working head of the machine, without an appreciable increase in the bulk of the tool carrier.

This aim, these objects and others which will become apparent from the following detailed description are achieved by the invention with a tool carrier having the characteristics stated in the appended claims.

Some preferred embodiments of the invention are now described with reference to the accompanying drawings, wherein:
Figure 1 is a perspective view of a tool carrier according to a first preferred embodiment of the invention;
Figure 2 is an enlarged-scale front view of a tool clamp which belongs to the carrier of Figure 1;
Figure 3 is a side view of the carrier of Figure 1;
Figure 4 is a view, similar to Figure 3, of a second embodiment of the invention; and
Figure 5 is a view, similar to Figure 3, of a third embodiment of the invention.

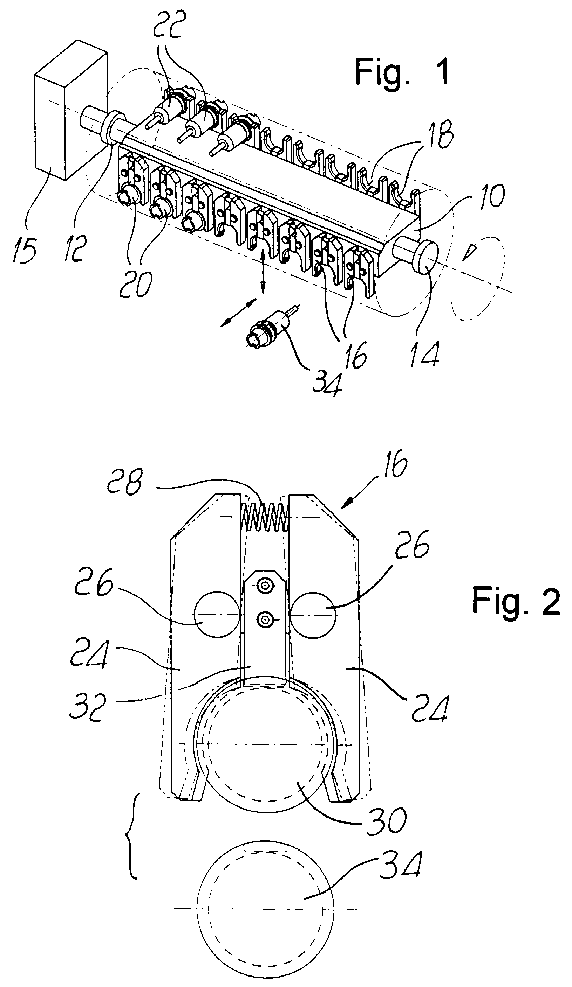

With reference to Figures 1 to 3, a tool carrier according to a preferred embodiment of the invention comprises a rigid elongated body 10 which is rotatably supported at its ends on supports 12 and 14 and is turned by an actuator which is schematically designated by the reference numeral 15, for example a hydraulically actuated rack-and-pinion device.

Respective rows of tool clamps 16 and 18 are mounted along opposite faces of the elongated body 10; each clamp is adapted to grip and retain, in an elastically detachable manner, a respective standard tool such as 20, 22.

As shown in detail in Figure 2, a clamp 16 and 18 comprises, in a per se known manner, two symmetrical jaws 24 which are pivoted at 26 on the body 10 and are actuated elastically by a spring 28 so as to close flexibly around the neck of a standard tool 30. A tooth 32 is fixed between the jaws 24 so as to fit in a corresponding notch of the tool to ensure its uniform orientation.

The carrier is conveniently arranged on a machine tool, not shown, so that the row of clamps 16 is in a position which can be accessed by the working head of the machine tool or by another tool changing element, so that a tool such as 34 can be moved laterally toward an empty clamp and inserted with a snap action in the clamp and so that one of the tools 20 can be picked up laterally, as is known in the field.

According to the invention, the carrier can be rotated through a half turn so as to swap the two rows of clamps 16 and 18, thus making the tools 22 supported by the row of clamps 18 accessible for swapping with the working head.

It is evident to the expert in the field that the rotation can easily occur under the control of the program and entails no intervention of the operator or any other kind of interruption of the machining process. In this manner, the number of tools available within the programmed machining is doubled given an equal stroke allowed to the working head. The advantage is particularly appreciable in the case of machine tools with working heads provided with two spindles.

It is also evident to the expert in the field that the invention entails no significant increase in the volume occupied by the carrier on the machine tool and that the increase in complexity and cost is also low.

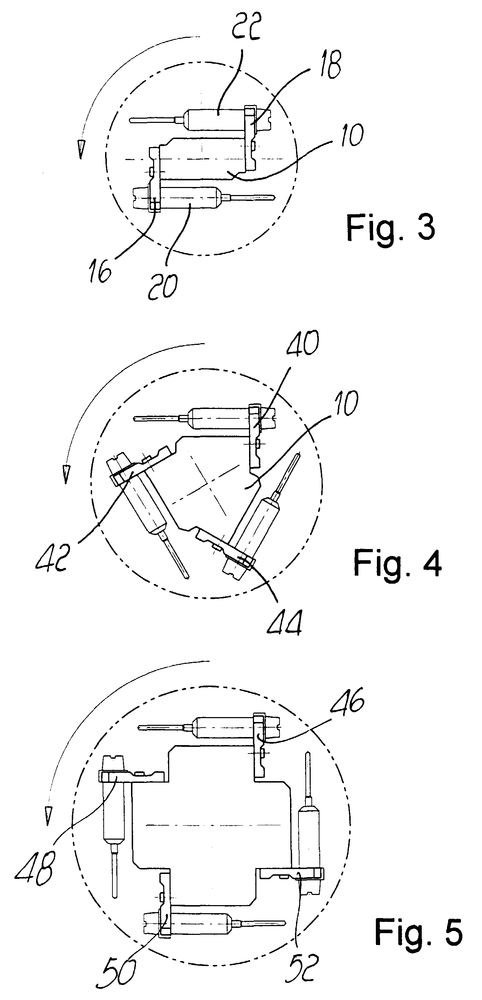

Figure 4 illustrates a second embodiment of the invention, wherein the carrier has three linear racks with clamps 40, 42 and 44 which are mounted in a triangular arrangement on an elongated body 46 which is rotatably supported exactly like the body 10 of Figures 1 to 3. In this case, the number of tools in the carrier is tripled with respect to the conventional rack and changing from one rack to the next of course occurs with a rotation through 120° instead of 180° as in the first embodiment. Figure 5 illustrates a third embodiment with four racks 46,48,50,52 and therefore with a quadrupled number of tools. The racks may of course be five or more, but it is evident that the diametrical size of the carrier increases rapidly as the number of racks increases.

The above described preferred embodiments of the invention may be subject to modifications and variations within the scope of the inventive concept. Said variations are to be considered as being within the scope of the protection of the invention to the extent to which they use technically equivalent means to achieve equal results.

The disclosures in Italian Patent Application No. TO97A000797 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A tool carrier for numeric-control machine tools, characterized in that it comprises an elongated body, which is rotatably mounted on a fixed shaft and is provided with at least two tool racks on mutually angularly spaced longitudinal sides, and motor means, which are adapted to turn the elongated body so as to place a chosen rack in a preset fixed angular position.

2. The tool carrier according to claim 1, characterized in that it comprises two racks which are mounted in diametrically opposite positions on said elongated body.

3. The tool carrier according to claim 1, characterized in that it comprises three racks which are mounted in a triangular configuration on said elongated body.

4. The tool carrier according to claim 1, characterized in that it comprises four racks mounted on said elongated body with angular offsets of 90° from each other.

5. The tool carrier according to claim 1, characterized in that each tool rack comprises a linear row of tool clamps.

6. The tool carrier according to claim 1, characterized in that said motor means are constituted by a hydraulically actuated rack-and-pinion device.
